# EUROPÄISCHE PATENTSCHRIFT

(11) **EP 3 824 543 B1**
(45) Veröffentlichungstag und Bekanntmachung des Hinweises auf die Patenterteilung: **30.04.2025**
(21) Anmeldenummer: 19734685.1
(22) Anmeldetag: 29.05.2019
(51) Int. Cl.: H02P 29/02, G05B 23/02

(54) **VERFAHREN ZUR ERFASSUNG VON BETRIEBSPARAMETERDATEN EINES MOTORSYSTEMS MIT ELEKTROMOTOR UND ENTSPRECHENDES MOTORSYSTEM**
METHOD FOR OBTAINING OPERATIONAL PARAMETERS OF AN ELECTRIC MOTOR DRIVE AND CORRESPONDING ELECTRIC MOTOR DRIVE
PROCÉDÉ POUR OBTENIR DES PARAMÈTRES DE FONCTIONNEMENT D'UN MOTEUR ÉLECTRIQUE ET MOTEUR ÉLECTRIQUE CORRESPONDANT

(30) Priorität: 17.07.2018 DE 102018211882
(43) Veröffentlichungstag der Anmeldung: 26.05.2021
(73) Patentinhaber: ZIEHL-ABEGG SE, 74653 Künzelsau (DE)
(72) Erfinder: KAMMERER, Matthias Carsten, 74635 Kupferzell (DE); WENGER, Bjoern, 74575 Schrozberg (DE)
(74) Vertreter: Ullrich & Naumann PartG mbB
(86) Internationale Anmeldenummer: PCT/DE2019/200053
(87) Internationale Veröffentlichungsnummer: WO 2020/015795

(56) Entgegenhaltungen:
- EP-A2- 1 967 930
- WO-A1-2004/079889
- DE-B3- 102016 108 506
- JP-A- 2006 101 576

## Beschreibung

Die Erfindung betrifft ein Verfahren zur Erfassung von Betriebsparameterdaten eines Motorsystems mit Elektromotor. Das Motorsystem kann vorzugsweise als Bestandteil für einen Ventilator vorgesehen sein.

Des Weiteren betrifft die Erfindung ein Motorsystem zur Erfassung von Betriebsparameterdaten.

Schließlich betrifft die Erfindung einen Ventilator mit einem entsprechenden Motorsystem.

Der Begriff "Motorsystem" ist im weitesten Sinne zu verstehen. Die Lehre der Erfindung lässt sich beispielsweise auf einen Elektromotor, auf die Anordnung mehrerer Elektromotoren, auf Elektromotorgruppen oder auf mehrere Elektromotorsysteme übertragen. Das Motorsystem kann eine Steuereinrichtung mit Prozessor und Speicher umfassen.

In der Praxis ist es immer wieder von Bedeutung, die Restlebensdauer eines Bauteils oder einer Baugruppe eines Motorsystems bzw. eines Elektromotors abzuschätzen bzw. zu bestimmen. Lediglich beispielhaft sei dazu auf die DE 10 2016 122 404 A1 verwiesen, die die Bestimmung der Rotorermüdung in der Baugruppe eines Elektromotors betrifft.

Die Bestimmung der Restlebensdauer eines Bauteils oder einer Baugruppe ist immer dann von ganz besonderer Bedeutung, wenn ein Ausfall zu Folgeschäden führen würde, wie es beispielsweise bei thermisch kritischen Anwendungen der Fall ist. Wenn beispielsweise in einem Serverraum die Kühlanlage oder ein Teil davon ausfällt, kann dies zu einer Überhitzung und einem Betriebsausfall oder gar einer Zerstörung von Servern und anderer Hardware führen. Ähnlich kritisch ist auch die Kühlung anderer komplexer und/oder teurer elektronischer Anlagen. In derartigen Anwendungsszenarien ist es hilfreich, wenn ein drohender Ausfall bereits frühzeitig angezeigt wird, damit die vom Ausfall bedrohte Komponente gegebenenfalls rechtzeitig vor dem Ausfall ausgetauscht werden kann. Des Weiteren ist in dieser Hinsicht auch von besonderer Relevanz, wenn bei Vorliegen einer Störung oder im Nachgang eines Schadenfalls zumindest eine Auswertung und Analyse von Betriebsparameterdaten vorgenommen werden kann, um eine Ursachenfindung zu ermöglichen.

Insbesondere bei Umrichtern, wie sie bei der Ansteuerung von Elektromotoren, beispielsweise EC (Electronically Commutated)-Motoren, zum Einsatz kommen, sind mehrere lebensdauerbegrenzende Bauteile und Baugruppen vorhanden. Am stärksten von einem Ausfall bedroht sind meist Halbleiter (vornehmlich in der Endstufe oder in Optokopplern) und Kondensatoren (vornehmlich bei Elektrolytkondensatoren im Zwischenkreis oder in Schaltnetzteilen). Insbesondere Kondensatoren unterliegen einer starken temperatur- und laststromabhängigen Alterung, weswegen die Lebensdauer stark variieren kann.

In der Praxis finden Elektromotoren im Rahmen von Ventilatoren weitreichend Verwendung, von Kleinstantrieben über Servomotoren bis hin zu Hochleistungsantrieben. Wie viele mechanisch bewegte Vorrichtungen sind auch Elektromotoren einem (mechanischen) Verschleiß unterworfen. Bei Elektromotoren mit Schleifring sind insbesondere der Schleifring und die Schleifkontakte betroffen. Aber auch Elektromotoren ohne Schleifring können durch Verschleiß betriebsunfähig werden. Hier sind unter den mechanischen Komponenten insbesondere die Lager der Motorwelle betroffen.

Das Ausmaß des Verschleißes ist insbesondere von den Betriebsbedingungen des Elektromotors abhängig. Wenn der Elektromotor beispielsweise bei zu hohen oder zu niedrigen Temperaturen betrieben wird, kann das Lagerfett nicht mehr optimal schmieren und das Lager wird dadurch schneller ausfallen. Auch starke Vibrationen können die Lebensdauer des Lagers verkürzen, da die Lager durch die Vibrationen zusätzliche Kräfte ableiten müssen. Daraus ergibt sich der Bedarf, physikalische Größen, die einen Einfluss auf Betriebsparameter eines Elektromotors haben, zu kennen. Mit Kenntnis der relevanten physikalischen Größen kann dann ein verschleißträchtiger Betrieb des Elektromotors erkannt oder bei einem bereits erfolgten Ausfall ein Ersatzmotor geeignet für die zu erwartenden Betriebsparameter ausgewählt werden.

Aus der Praxis ist es bekannt, an dem Gehäuse eines Elektromotors Sensoren anzubringen, die Rückschlüsse auf Betriebsparameter des Elektromotors erlauben. Hier werden insbesondere die Temperatur und Vibrationen gemessen. Ferner kann aus verschiedenen Kenngrößen des Speisesignals des Elektromotors, beispielsweise dem Spannungsripple oder der Stromstärke, auf das Betriebsverhalten des Motors geschlossen werden.

Folglich ist eine Konservierung und Speicherung der ermittelbaren Betriebsparameterdaten von besonderer Bedeutung, um diese gesammelten Betriebsdaten zu Optimierungszwecken oder zur Fehlersuche analysieren und auswerten zu können. Beispiele dazu sind in EP 1 967 930 A2, JP 2006 101576 A , DE 10 2016 108506 B3 , WO 2004/079889 A1 zu finden.

Eine kontinuierliche Datenerfassung verursacht jedoch einen erheblichen Speicherbedarf, der bei der Hardware von Ventilatoren in der Regel weder vorhanden noch realisierbar ist. Daher könnte über ein in dem Motorsystem vorzusehendes Gateway eine Möglichkeit geschaffen werden, um erfasste Betriebsparameterdaten an eine zentrale Auswertungseinheit direkt weiterzuleiten. Dies ist jedoch umständlich und erfordert eine dauerhafte Anbindung des Gateways an zentrale übergeordnete Recheneinheiten, die die enormen Datenmengen aufnehmen und weiterverarbeiten könnten. Ferner ist die dabei erforderliche Übertragung von erheblichen Datenmengen ineffizient und nachteilig.

Auf Basis des aus der Praxis bekannten Serienstandes in Bezug auf Ventilatoren findet daher keine aussagefähige Aufzeichnung von Betriebsparameterdaten bei Standardseriengeräten statt und insbesondere im Hinblick auf den Kundenbetrieb liegen keine Betriebsdaten vor, die ein Optimierungspotenzial und/oder eine Bestimmung/Identifikation von Versagensursachen eines Motorsystems zulassen würden.

Der vorliegenden Erfindung liegt daher die Aufgabe zugrunde, ein Verfahren zur Erfassung von Betriebsparameterdaten eines einen Elektromotor umfassenden Motorsystems der eingangs genannten Art derart auszugestalten und weiterzubilden, dass eine verbesserte und/oder effizientere Erfassung und Speicherung von Betriebsparameterdaten, vorzugsweise direkt in/auf dem Motorsystem, möglich ist. Des Weiteren sollen ein entsprechendes Motorsystem und ein entsprechender Ventilator angegeben werden.

Erfindungsgemäß wird die voranstehende Aufgabe durch die Merkmale des Anspruchs 1 gelöst. Danach ist ein Verfahren zur Erfassung von Betriebsparameterdaten eines Motorsystems mit Elektromotor, vorzugsweise für einen Ventilator, angegeben, wobei während eines Betriebs des Motorsystems Zustände von Betriebsparametern erfasst werden, wobei die Betriebsparameter einen Basisparameter und zumindest einen Zusatzparameter umfassen, wobei, basierend auf einer Zustandserfassung des Basisparameters, Zustandsänderungsereignisse des Basisparameters ermittelt werden, wobei bei einer Detektion eines Zustandsänderungsereignisses des Basisparameters ein Zustand des Zusatzparameters erfasst wird, und wobei der erfasste Zustand des Zusatzparameters mit dem detektierten Zustandsänderungsereignis verknüpft gespeichert wird.

Die voranstehende Aufgabe ist des Weiteren durch die Merkmale des Anspruchs 16 gelöst. Danach ist ein Motorsystem zur Erfassung von Betriebsparameterdaten angegeben, wobei das Motorsystem folgendes umfasst:
einen Elektromotor mit einem Stator und einem relativ zu dem Stator drehbaren Rotor, und
eine Steuereinrichtung mit einem Prozessor und einem Speicher, wobei die Steuereinrichtung derart konfiguriert ist, dass während eines Betriebs des Motorsystems Zustände von Betriebsparametern erfasst werden, wobei die Betriebsparameter einen Basisparameter und zumindest einen Zusatzparameter umfassen, wobei die Steuereinrichtung weiterhin derart konfiguriert ist, dass, basierend auf einer Zustandserfassung des Basisparameters, Zustandsänderungsereignisse des Basisparameters ermittelt werden,
dass bei einer Detektion eines Zustandsänderungsereignisses des Basisparameters ein Zustand des Zusatzparameters erfasst wird, und
dass in dem Speicher der erfasste Zustand des Zusatzparameters mit dem detektierten Zustandsänderungsereignis verknüpft gespeichert wird.

Schließlich ist die voranstehende Aufgabe durch einen Ventilator mit den Merkmalen des Anspruchs 17 gelöst. Danach umfasst der Ventilator ein Motorsystem nach Anspruch 16.

In erfindungsgemäßer Weise ist zunächst erkannt worden, dass es von ganz erheblichem Vorteil ist, wenn die für spätere Analysen und Auswertungen erforderlichen Betriebsparameterdaten eines Motorsystems bereits im Rahmen der Datenerfassung möglichst reduziert werden. In weiter erfindungsgemäßer Weise ist erkannt worden, dass zur Reduktion der zu speichernden Datenmenge eine Auswahlmethode implementierbar ist anhand derer festgelegt wird, ob der aktuelle Betriebspunkt ausgewertet bzw. gespeichert werden soll oder nicht. Zur Erfassung von Betriebsparameterdaten des Motorsystems werden daher während des Betriebs Zustände von Betriebsparametern erfasst. Die Betriebsparameter umfassen dabei einen Basisparameter und zumindest einen Zusatzparameter. Erfindungsgemäß werden basierend auf einer Zustandserfassung des Basisparameters vorgebbare Zustandsänderungsereignisse des Basisparameters ermittelt. Gemäß der Erfindung werden dann bei einer Detektion eines vorgebbaren Zustandsänderungsereignisses des Basisparameters ein, vorzugsweise zum Detektionszeitpunkt des Zustandsänderungsereignisses herrschender, Zustand des Zusatzparameters erfasst. Der erfasste Zustand des Zusatzparameters wird dann mit dem detektierten Zustandsänderungsereignis verknüpft gespeichert.

Folglich ist mit dem erfindungsgemäßen Verfahren zur Erfassung von Betriebsparameterdaten eines Motorsystems und mit dem erfindungsgemäßen Motorsystem sowie mit dem erfindungsgemäßen Ventilator eine verbesserte und/oder effizientere Erfassung und Speicherung von Betriebsparameterdaten in dem Motorsystem ermöglicht. Der Erfindung liegt somit die Idee zugrunde, relevante Betriebspunkte des Motorsystems, insbesondere in Bezug auf relevante Bauteile des Motorsystems, speichereffizient zu erfassen, so dass Betriebsdaten für gegebenenfalls darauf aufbauende Analysen im Schadensfall (Ursachenfindung) zur Verfügung stehen bzw. so dass die Betriebsparameterdaten als zeitlich langfristige Datenbasis zur systematischen Entwicklung und Optimierung des Motorsystems bzw. dessen Bauteile herangezogen werden kann. In vorteilhafter Weise ist bei dem Motorsystem bzw. bei den eingesetzten Elektromotoren ein Steuergerät bzw. eine Steuereinrichtung mit Speicherfunktionalität vorgesehen.

An dieser Stelle sei angemerkt, dass unter einem zu ermittelnden "vorgebbaren Zustandsänderungsereignis" - insbesondere im Rahmen der Ansprüche und vorzugsweise im Rahmen der Beschreibung - ein bestimmtes bzw. definiertes Zustandsänderungsereignis verstanden werden kann, bei dem sich der Zustand eines Betriebsparameters auf signifikante Weise ändert. Dabei ist denkbar, dass das vorgebbare Zustandsänderungsereignis im Hinblick auf dessen Signifikanz im Vorfeld des Motorbetriebs - starr oder nicht starr - festgelegt wird. Ferner ist denkbar, dass unter einem vorgebbaren Zustandsänderungsereignis ein Zustandsänderungsereignis verstanden werden kann, das während einer Einlernphase des Motorsystems im Kundenbetrieb und/oder während des laufenden Betriebs des Motorsystems von dem Motorsystem selbstständig angelegt und/oder angepasst werden kann. Somit ist denkbar, dass im Rahmen einer vorteilhaften Ausgestaltung das vorgebbare Zustandsänderungsereignis nicht starr vorgegeben bzw. vordefiniert ist, sondern vielmehr im Betrieb durch ein lernendes Motorsystem angepasst werden kann.

Ferner sei darauf hingewiesen, dass unter der "Erfassung" bzw. dem "Erfassen" eines Zustands eines Betriebsparameters - insbesondere im Rahmen der Ansprüche und vorzugsweise im Rahmen der Beschreibung - eine Zustandserfassung im weitesten Sinne zu verstehen ist. So kann der Zustand auf Basis von Messungen gewonnen werden. Des Weiteren ist denkbar, dass der Zustand eines Betriebsparameters berechnet wird, zum Beispiel auf Basis von betriebsspezifischen Simulationen. Dabei kann auch eine kombinierte Nutzung von Simulationsdaten und realen Messdaten möglich sein. Somit kann der Ausdruck "erfasste Zustand" eines Betriebsparameters (Basisparameter und/oder Zusatzparameter) derart verstanden werden, dass der Zustand durch Messen und/oder durch Berechnen erfasst wird.

Die "Betriebsparameter eines Elektromotors eines Motorsystems" können verschiedentliche Informationen umfassen, die die Betriebsbedingungen des Elektromotors bzw. des Motorsystems kennzeichnen. Derartige Betriebsparameter können beispielsweise die Betriebstemperatur, die Temperatur des Lagers, Vibrationsbeanspruchung, die Orientierung des Elektromotors, die Drehzahl oder die Luftfeuchtigkeit sein. Diese kurze und nicht als abschließend anzusehende Aufzählung zeigt, was alles Betriebsparameter des Elektromotors sein können. Prinzipiell kann alles ein derartiger Betriebsparameter sein, das die Lebensdauer eines Elektromotors bzw. eines Motorsystems direkt oder indirekt beeinflusst. Entsprechend vielfältig kann auch die mit einem Sensor erfasste physikalische Größe sein, die für den jeweiligen Betriebsparameter repräsentativ ist. Ein Betriebsparameter bzw. dessen Zustandserfassung kann somit auf Basis von einer oder mehreren gemessenen - vorzugsweise physikalischen - Größen erfolgen. Des Weiteren ist denkbar, dass ein Betriebsparameter bzw. dessen Zustandserfassung auf Basis von Daten erfolgt, die durch interne Verarbeitung bzw. durch Simulation gewonnen werden und/oder ggf. durch Berechnungen erfasst werden.

Zum Ablegen von erfassten Betriebsparameterdaten in bzw. auf dem Motorsystem kann die Elektronik des Motorsystems vorzugsweise einen Speicher aufweisen, der zum Speichern von erfassten Zuständen der Betriebsparameter ausgebildet ist. Zum Vermeiden eines Datenverlusts bei Ausfall der Energieversorgung kann der Speicher dabei vorzugsweise als nichtflüchtiger Speicher ausgebildet sein. Ein derartiger nichtflüchtiger Speicher kann beispielsweise ein Flash-Speicher, ein EEPROM (Electronically Erasable Programmable Read-Only Memory), ein NVRAM (Non-volatile Random Access Memory) oder ein anderer Halbleiterspeicher sein.

In vorteilhafter Weise kann bei der Zustandserfassung eines Betriebsparameters eine vorgebbare Klassierung zugrunde gelegt werden, wobei ein erfasster Zustand des Betriebsparameters einer vorgegebenen Klasse der Klassierung zugeordnet wird. Somit kann ein geeignetes Zählverfahren implementiert werden, das eine effiziente Erfassung und Speicherung von Zuständen der zu überwachenden Betriebsparameter ermöglicht. Eine Klasse kann beispielsweise einem vordefinierten Betriebsparameterbereich entsprechen. Demnach kann eine bereichsweise Aufteilung eines Betriebsparameters in einem definierten Betriebsparameterbereich als Klasse bezeichnet werden. Zweckmäßigerweise kann für eine Zählung von Zustandsänderungsereignissen eine Unterteilung des Messbereichs der Betriebsparameter in Klassen gleicher Größe vorgenommen werden, so dass die Klassierung von einem Betriebsparameter äquidistant definiert ist. Des Weiteren ist auch denkbar, dass die Klassierung von einem Betriebsparameter nichtlinear definiert wird.

An dieser Stelle sei angemerkt, dass die vorgebbare Klassierung - und damit die durch die Klassierung vorgegebenen Klassen - bereits im Vorfeld des Motorbetriebs festgelegt sein kann/können, so dass eine vordefinierte Klassierung vorgesehen ist. Des Weiteren ist denkbar, dass die Klassierung - und damit die durch die Klassierung vorgegebenen Klassen - im Betrieb des Motorsystems und/oder in einer Einlernphase des Motorsystems, ggf. individuell, für einen Betriebsparameter angelegt und/oder angepasst wird bzw. werden.

In weiter vorteilhafter Weise kann bei der Detektion des Zustandsänderungsereignisses des Basisparameters ein zum Detektionszeitpunkt des Zustandsänderungsereignisses herrschender Zustand eines oder mehrerer weiterer Zusatzparameter erfasst werden, wobei der erfasste Zustand des weiteren Zusatzparameters bzw. die erfassten Zustände der weiteren Zusatzparameter ebenfalls mit dem detektierten Zustandsänderungsereignis verknüpft gespeichert wird bzw. werden. Folglich können weitere Betriebsparameterdaten in Relation zu dem jeweils erfassten Zustandsänderungsereignis effizient konserviert bzw. gespeichert werden.

Erfindungsgemäß ist vorgesehen, dass das detektierte Zustandsänderungsereignis des Basisparameters und der erfasste Zustand des Zusatzparameters als Zustandskombination gespeichert werden. Ferner ist vorgesehen, dass bei Berücksichtigung mehrerer Zusatzparameter die erfassten Zustände der Zusatzparameter und das detektierte Zustandsänderungsereignis als Zustandskombination gespeichert werden. Das heißt, dass das detektierte Zustandsänderungsereignis und der erfasste Zustand des Zusatzparameters und ggf. der erfasste Zustand des weiteren Zusatzparameters bzw. die erfassten Zustände der weiteren Zusatzparameter als Zustandskombination gespeichert werden können.

Folglich ist eine speichereffiziente Erfassung von Betriebsparameterdaten möglich, bei der eine verknüpfte Betrachtung mehrerer Betriebsparameter erfolgen kann. Unter Berücksichtigung von zwei oder mehr Betriebsparametern kann eine Speicherung von ermittelten Betriebszuständen der Betriebsparameter implementiert werden, wobei im Betrieb des Motorsystems in Abhängigkeit der Änderung eines ersten Betriebsparameters als Basisparameter der parallel vorherrschende Zustand mindestens eines weiteren Betriebsparameters als Zusatzparameter detektiert und gespeichert wird. Somit kann auf raffinierte Weise eine Datenerfassung und Speicherung von Betriebsdaten auf dem Motorsystem erfolgen, nämlich durch eine intelligente Komprimierung aufgrund von Selektion einer spezifischen Datenmenge.

In vorteilhafter Weise kann daher die Speicherung der Zustandskombination in Abhängigkeit von der Veränderung des Basisparameters erfolgen. Folglich ist ein speichereffizientes Verfahren bereitstellbar, wobei infolge von detektierten Zustandsänderungsereignissen relevante Betriebszustände des Motorsystems in Form der Zustandskombination erfasst werden und abhängig von der detektierten charakteristischen Zustandsänderung des Basisparameters eine Maßnahme zur Abspeicherung der Zustandskombination eingeleitet bzw. durchgeführt wird.

Im Hinblick auf eine effiziente Speicherung von erfassten bzw. berechneten Betriebsparameterdaten ist es denkbar, dass das detektierte Zustandsänderungsereignis durch die Zustandskombination derart gespeichert wird, dass Startzustand und Zielzustand der Zustandsänderung des detektierten Zustandsänderungsereignisses des Basisparameters in der Zustandskombination hinterlegt sind. Somit wird der Zustand vor der charakteristischen Zustandsänderung und der Zustand nach der charakteristischen Zustandsänderung als Start- und Zielzustand des Zustandsänderungsereignisses des Basisparameters gespeichert.

Erfindungsgemäß können Zustandskombinationen, die aufgrund von detektierten Zustandsänderungsereignissen während des Betriebs erzeugt werden, in bzw. mittels einer Matrix gespeichert werden. Die Matrix umfasst Matrixelemente, die über die Spalten und Zeilen der Matrix adressierbar sind. In weiter vorteilhafter Weise kann die Matrix als mehrdimensionale Matrix bzw. als geschachtelte Matrix implementiert sein, wobei in einem Matrixelement wiederum weitere Unterelemente gespeichert werden. Die Unterelemente können dabei Skalare, Vektoren und/oder Matrizen umfassen.

Des Weiteren ist vorgesehen, dass die Zustandskombinationen in der Matrix so abgelegt werden, dass eine Verteilung der detektierten Zustandsänderungsereignisse des Basisparameters erhältlich ist. Somit sind die jeweiligen Zustandsänderungen der Zustandsänderungsereignisse des Basisparameters für eine spätere Betriebsdatenanalyse verfügbar.

Im Hinblick auf eine effiziente Speicherung der erfassten bzw. ermittelten Betriebszustände sind die Zustandskombinationen in der Matrix so abgelegt werden, dass über Indizes der Matrix, vorzugsweise Spaltenindizes und Zeilenindizes der Matrix, Startzustände und Zielzustände der Zustandsänderungsereignisse abgebildet werden. In den Matrixelementen der Matrix können zweckmäßigerweise Informationen hinsichtlich der Anzahl der Zustandsereignisse hinterlegt werden. Somit ist eine einfache und effiziente Speicherung der erfassten Betriebszustände realisiert.

In vorteilhafter Weise können in den Matrixelementen der Matrix Informationen über erfasste Zustände von Zusatzparametern hinterlegt werden. Dabei kann es sich bei der Matrix um eine geschachtelte Matrix mit Matrixelementen handeln, wobei die Matrixelemente wiederum Vektoren und/oder eine oder mehrere Matrizen umfassen können. Somit können diverse Informationen über Zusatzparameter, insbesondere die erfassten Zustände der Zusatzparameter in der geschachtelten Matrix auf effiziente Weise hinterlegt bzw. gespeichert werden.

Im Hinblick auf eine geeignete Sammlung von relevanten Betriebsparameterdaten kann der mittels der Zustandserfassung des Basisparameters ermittelte Zustand des Basisparameters in vorgebbaren bzw. vordefinierten Auswertungsintervallen einer Auswertung/Analyse unterzogen werden, um ein Zustandsänderungsereignis des Basisparameters zu detektieren. Somit wird auf effiziente Weise die Detektion von Zustandsänderungsereignissen implementiert. Ein Zustandsänderungsereignis kann dabei eine vordefinierte Zustandsänderung des Basisparameters repräsentieren.

In vorteilhafter Weise kann die Auswertung derart implementiert sein, dass bei Überschreiten einer vorgebbaren Änderungsschwelle, insbesondere einer Zustandsänderungsschwelle, ein Zustandsänderungsereignis des Basisparameters festgestellt wird. Somit kann durch die Wahl einer geeigneten Änderungsschwelle festgelegt werden, welche Zustandsänderungen als charakteristische Zustandsänderungen hinsichtlich der Erfassung und Speicherung von Betriebsparameterdaten berücksichtigt werden sollen.

In vorteilhafter Weise können die Betriebsparameter einen Drehzahlparameter, einen Temperaturparameter, einen Stromparameter und/oder einen Spannungsparameter etc. umfassen. Somit können Betriebsparameter des Motorsystems bzw. des Elektromotors berücksichtigt und gespeichert werden, die für eine etwaige spätere Analyse und/oder Optimierung des Motorsystems von besonderer Bedeutung sind. Betriebsparameter können somit Informationen über Drehzahl, Temperatur, Strom, Spannung etc. umfassen. Des Weiteren sind auch daraus abgeleitete Gradienten oder sonstige mathematische Derivate denkbar.

Im Hinblick auf eine Erfassung und Speicherung von aussagekräftigen Betriebsparameterdaten ist denkbar, dass als Basisparameter ein Drehzahlparameter verwendet wird. Als Zusatzparameter könnte in geeigneter Weise ein Temperaturparameter und/oder ein Stromparameter berücksichtigt und erfasst werden. Durch die Speicherung der Betriebsparameterdaten in Abhängigkeit des Drehzahlparameters als Basisparameter können sich beispielsweise folgende Vorteile ergeben:
- Detaillierte Kenntnis über die Betriebsartenwechsel bei einem Motorsystem
- Eine systematische Analyse von Kundenbetriebsparametern wird ermöglicht
- Eine Datenanalyse zur Korrelationsermittlung zwischen Betriebsart und Schadensmuster wird ermöglicht
- Eine Berücksichtigung von Kaltstarts bei der Abschätzung der Lebensdauer

Des Weiteren ist es im Hinblick auf eine Erfassung und Speicherung von aussagekräftigen Betriebsparameterdaten denkbar, dass als Basisparameter ein Spannungsparameter verwendet wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: in einer schematischen Ansicht ein Blockschaltbild eines Verfahrens zur Erfassung von Betriebsparameterdaten eines Motorsystems gemäß einem Ausführungsbeispiel der Erfindung,
- Fig. 2: in einer schematischen Ansicht einen Algorithmus zur Erkennung eines Zustandsänderungsereignisses für ein Verfahren zur Erfassung von Betriebsparameterdaten eines Motorsystems gemäß einem Ausführungsbeispiel der Erfindung,
- Fig. 3a: ein Diagramm zur beispielhaften Veranschaulichung von über den Zeitverlauf ermittelten Zuständen eines Betriebsparameters,
- Fig. 3b: ein Diagramm zur beispielhaften Veranschaulichung von über den Zeitverlauf ermittelten Zuständen eines weiteren Betriebsparameters,
- Fig. 4: in einer schematischen Ansicht eine beispielhafte Speicherung von ermittelten Zuständen von Betriebsparametern als Zustandskombination in einer geschachtelten Matrix gemäß einem Ausführungsbeispiel der Erfindung, und
- Fig. 5: in einer schematischen Ansicht Verfahrensschritte eines Verfahrens gemäß einem Ausführungsbeispiel der Erfindung.

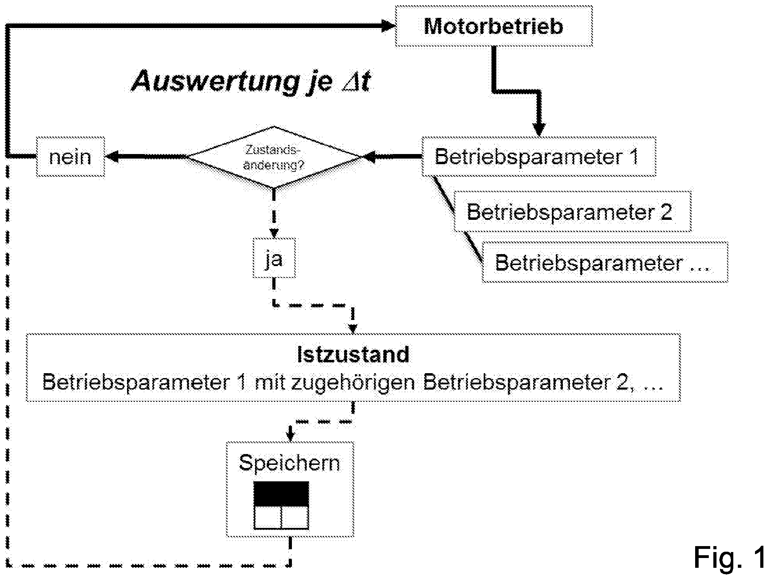

Fig. 1 zeigt in einer schematischen Ansicht ein Blockschaltbild eines Verfahrens zur Erfassung von Betriebsparameterdaten eines Motorsystems gemäß einem Ausführungsbeispiel der Erfindung. Fig. 1 zeigt das Prinzip eines Verfahrens gemäß einem Ausführungsbeispiel, das beispielsweise auf einem Außenläufermotor eines Motorsystems bzw. eines Ventilators angewendet werden kann. Während des Betriebs des Motorsystems bzw. des Ventilators, nämlich während des Motorbetriebs, werden basierend auf einer Zustandserfassung des Betriebsparameters 1 als Basisparameter, vordefinierte Zustandsänderungsereignisse des Betriebsparameters 1 ermittelt. Das heißt während des Motorbetriebs wird der Zustand des Betriebsparameters 1 über den Zeitverlauf hinweg erfasst, wobei der in den vorgebbaren Auswertungsintervallen Δt ermittelte Zustand des Betriebsparameters 1 einer Auswertung unterzogen wird, so dass vordefinierte bzw. charakteristische Zustandsänderungen des Betriebsparameters 1 detektiert werden. Wird im Rahmen der Auswertung keine charakteristische Zustandsänderung des Betriebsparameters 1 festgestellt, so wird der Motorbetrieb unverändert fortgeführt. Im Falle einer Detektion einer charakteristischen Zustandsänderung wird eine Speicherfunktion ausgelöst. Somit werden während des Betriebs des Motorsystems des Ventilators charakteristische Zustandsänderungen über damit zusammenhängende Betriebsparameter detektiert und gegebenenfalls eine Speicherfunktion ausgelöst. Die Speicherfunktion ist dann derart konfiguriert, dass die Zustandsänderung des Betriebsparameters 1 zusammen mit dem zugehörigen Zustand des Betriebsparameters 2 und gegebenenfalls von Zuständen weiterer Betriebsparameter als Zustandskombination gespeichert wird. Hierzu kann in dem Motorsystem bzw. im Ventilator ein entsprechender Speicher zur Verfügung stehen. Der Motorbetrieb wird dabei fortlaufend fortgeführt. Im Ergebnis können so relevante Zustandskombinationen, die relevante Betriebsparameterzustände darstellen, in Abhängigkeit einer Zustandsänderung eines Basisparameters, hier Betriebsparameter 1, detektiert und gespeichert werden.

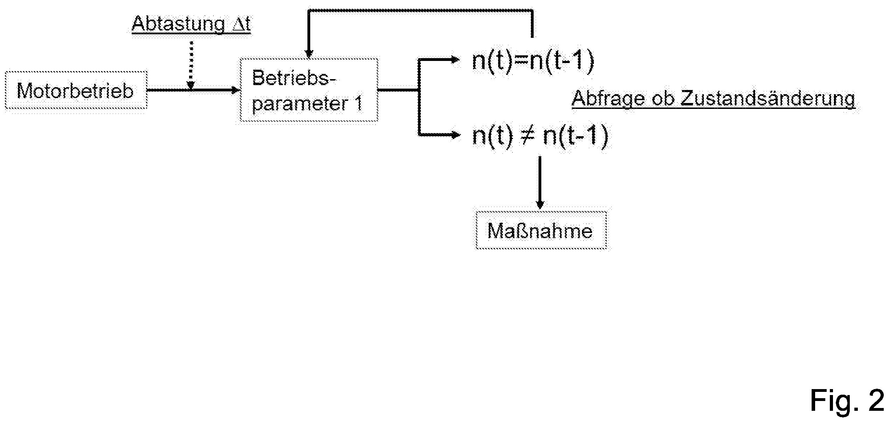

Fig. 2 zeigt in einer schematischen Ansicht einen Algorithmus zur Erkennung eines Zustandsänderungsereignisses für ein Verfahren zur Erfassung von Betriebsparameterdaten eines Motorsystems gemäß einem Ausführungsbeispiel der Erfindung. Fig. 2 illustriert beispielhaft einen, dem Verfahren zu Grunde liegenden Algorithmus, der zur Detektion einer charakteristischen Zustandsänderung des Basisparameters verwendet werden kann. Während des Motorbetriebs erfolgt in vordefinierten Auswertungsintervallen eine Abtastung des Basisparameters des Motorsystems. Der abgetastete Zustand n(t) des Basisparameters zum Abtastzeitpunkt t wird fortlaufend mit dem vorgegangenen Zustand n(t-1) des Basisparameters zum Abtastzeitpunkt t-1 verglichen, um ein Zustandsänderungsereignis aufgrund einer charakteristischen Zustandsänderung zu detektieren. Im Falle der Detektion einer Zustandsänderung wird eine Maßnahme zur Speicherung des detektierten Zustandsänderungsereignisses ausgelöst, wobei neben der detektierten charakteristischen Zustandsänderung auch der jeweils zum Detektionszeitpunkt herrschende Zustand von zumindest einem Zusatzparameter gespeichert wird.

Somit wird während des Betriebs in definierten Auswertungsintervallen die Änderung eines als Basisparameter fungierenden Betriebsparameters analysiert. Der zu dem Zustandsänderungsereignis gehörende Betriebszustand Motorsystems wird dabei über das Ausmaß der quantitativen Änderung des Basisparameters, also der Zustandsänderung des Basisparameters, und über während dem Zustandsänderungsereignis vorliegende Zustände mindestens eines Zusatzparameters charakterisiert.

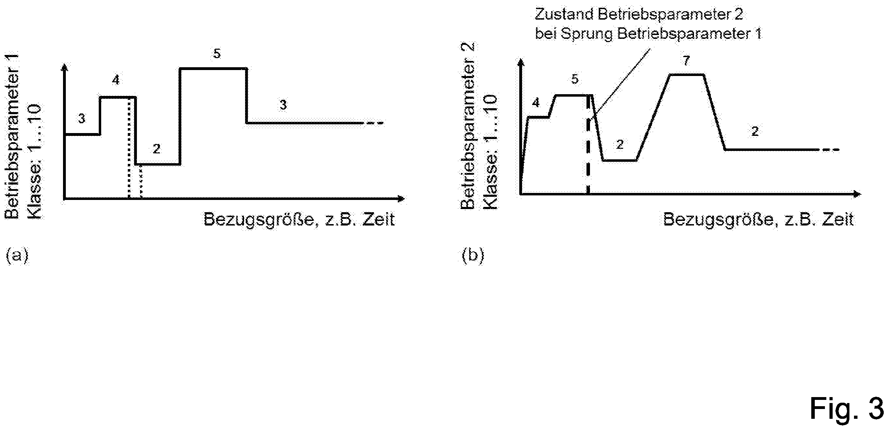

Fig. 3a und Fig. 3b zeigen jeweils ein Diagramm zur beispielhaften Veranschaulichung von über den Zeitverlauf ermittelten Zuständen eines Betriebsparameters. Die x-Achsen in Fig. 3a bzw. in Fig. 3b repräsentieren jeweils die Bezugsgröße, zum Beispiel die Zeit, zu der die Zustände des Betriebsparameters 1 bzw. des Betriebsparameters 2 in Relation gesetzt werden. Als Bezugsgröße könnten anstelle der Zeit auch Größen wie Strom, Leistung oder Temperatur bzw. Kombinationen dieser Größen verwendet werden. Die y-Achse in Fig. 3a bzw. in Fig. 3b repräsentiert die möglichen Zustände des Betriebsparameters 1 bzw. des Betriebsparameters 2, wobei der Wertebereich der Betriebsparameter 1 und 2 in Klassen 1 bis 10 eingeteilt ist.

Der Betriebsparameter 1 dient als Basisparameter, wobei der in Fig. 3a dargestellte Verlauf des Basisparameters einen beispielhaften Verlauf eines Drehzahlparameters repräsentiert. In dem in Fig. 3a mit gestrichelten Linien illustrierten Auswertungsintervall Δt ist ein Zustandsänderungsereignis zu entnehmen, bei dem ein Drehzahlsprung von Klasse 4 zu Klasse 2 stattfindet.

Der Betriebsparameter 2 dient als Zusatzparameter, wobei der in Fig. 3b dargestellte Verlauf des Zusatzparameters einen beispielhaften Verlauf eines Temperaturparameters repräsentiert. Der Detektionszeitpunkt des Zustandsänderungsereignisses des Basisparameters ist in dem Diagramm gemäß Fig. 3b mit einer gestrichelten vertikalen Linie illustriert. Der zum Detektionszeitpunkt des Zustandsänderungsereignisses herrschende Zustand des Zusatzparameters ist damit in Fig. 3b der Klasse 5 zugeordnet. Somit veranschaulicht Fig. 3 einen in dem Auswertungsintervall Δt vorkommenden Drehzahlsprung als Zustandsänderungsereignis, wobei der Drehzahlparameter von Zustandsklasse 4 nach Zustandsklasse 2 springt. Zum Zeitpunkt des Zustandsänderungsereignisses wird der als Zusatzparameter fungierende Temperaturparameter mit der Zustandsklasse 5 erfasst.

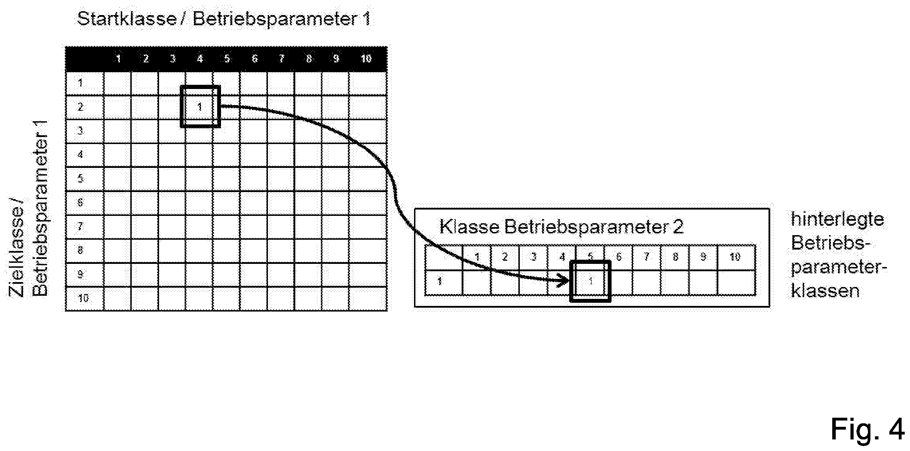

Fig. 4 zeigt in einer schematischen Ansicht eine beispielhafte Speicherung von ermittelten Zuständen von Betriebsparametern als Zustandskombination in einer geschachtelten Matrix gemäß einem Ausführungsbeispiel der Erfindung. Fig. 4 illustriert die Speicherung von Betriebsparameterdaten anhand der beispielhaften Verläufe von Betriebsparameter 1 und Betriebsparameter 2 gemäß Fig. 3, wobei die Speicherung von Daten durch Ablage der erfassten Betriebszustände in Form von definierten Klassen in einer geschachtelten Matrix erfolgt. Als Klasse wird dabei eine bereichsweise Aufteilung von Betriebsparametern in einen definierten Betriebsparameterwertebereich bezeichnet. Die Klassierung der Betriebsparameter kann dabei äquidistant oder nichtlinear definiert sein. In der Hauptmatrix wird nach der Zustandsänderung von Betriebsparameter 1 das detektierte Zustandsänderungsereignis so abgelegt, dass Start- und Zielklasse, d.h. der Zustand des Betriebsparameter 1 als Basisparameter vor und nach der Zustandsänderung nachvollziehbar ist. Die Anzahl der Einträge in einem Matrixelement beschreibt die Anzahl der Zustandsänderungsereignisse charakterisiert durch die Klassierung des Betriebsparameters 1 als Basisparameter.

Neben der hinterlegten Zustandsänderung des Zustandsänderungsereignisses (von Klasse nach Klasse), das heißt der Zustandsänderung des Betriebsparameters 1 als Basisparameter, wird in einem implementierten Programmcode zusätzlich die Information über weitere Betriebsparameter, nämlich der Zusatzparameter, abgelegt, die mit dem Ereignis der Zustandsänderung vom Basisparameter verknüpft sind. Somit kann beispielsweise als Betriebsparameterdaten gespeichert werden, dass für den Basisparameter (Betriebsparameter 1) ein Drehzahlsprung von Klasse 4 nach Klasse 2 aufgetreten ist und dass zum Ereignis des Drehzahlsprungs beim Zusatzparameter (Betriebsparameter 2) eine Temperatur der Klasse 5 vorlag.

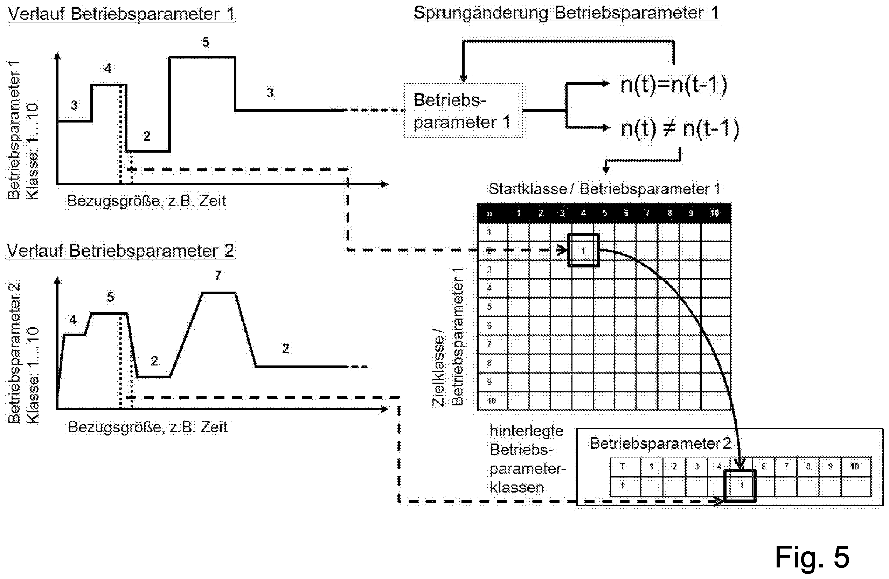

Fig. 5 veranschaulicht einzelne Verfahrensschritte eines Verfahrens gemäß einem Ausführungsbeispiel der Erfindung in einer Gesamtübersicht. Betriebsparameterdaten eines Motorsystems werden erfasst, wobei während des Betriebs des Motorsystems Zustände von Betriebsparametern 1 und 2 erfasst werden. Betriebsparameter 1 stellt einen Basisparameter und Betriebsparameter 2 einen Zusatzparameter dar. Basierend auf einer Zustandserfassung des als Basisparameter fungierenden Betriebsparameters 1 werden vordefinierte Zustandsänderungsereignisse des Betriebsparameters 1 ermittelt. Bei einer Detektion eines Zustandsänderungsereignisses des Betriebsparameters 1 wird ein - zum Detektionszeitpunkt des Zustandsänderungsereignisses herrschender - Zustand des als Zusatzparameter fungierenden Betriebsparameters 2 erfasst. Der erfasste Zustand des Betriebsparameters 2 wird mit dem detektierten Zustandsänderungsereignis verknüpft in einer geschachtelten Matrix gespeichert.

Das detektierte Zustandsänderungsereignis und der erfasste Zustand des Zusatzparameters werden als Zustandskombination in der Matrix gespeichert. Die Zustandskombination wird in der Matrix so abgelegt, dass über Spalten und Zeilen der Matrix der Startzustand und der Zielzustand des detektierten Zustandsänderungsereignisses abgebildet ist. In den Matrixelementen der Hauptmatrix werden Informationen hinsichtlich der Anzahl der detektierten Zustandsereignisse hinterlegt. Des Weiteren sind in den Matrixelementen Informationen hinsichtlich erfasster Zustände des Zusatzparameters, nämlich des Betriebsparameters 2, hinterlegt. Im Konkreten wird gemäß dem in Fig. 5 dargestellten Beispiel die charakteristische Zustandsänderung des Betriebsparameters 1 von Startklasse 4 nach Zielklasse 2 in der Hauptmatrix abgespeichert. In dem entsprechenden Matrixelement wird weiterhin der zum Detektionszeitpunkt des Zustandsänderungsereignisses herrschende Zustand des Zusatzparameters abgelegt, nämlich Klasse 5 für den als Zusatzparameter fungierenden Betriebsparameter 2.

Somit ist zur Reduktion der zu speichernden Datenmenge eine Auswahlmethode implementiert, anhand derer festgelegt wird, ob der aktuelle Betriebspunkt ausgewertet bzw. gespeichert werden soll oder nicht. Folglich ist eine speichereffiziente Erfassung von Betriebsparameterdaten realisiert.

Hinsichtlich weiterer vorteilhafter Ausgestaltungen des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Verfahrens und des erfindungsgemäßen Motorsystems sowie des erfindungsgemäßen Ventilators lediglich zur Erörterung der beanspruchten Lehre dienen, diese jedoch nicht auf die Ausführungsbeispiele einschränken.

## Patentansprüche

1. Verfahren zur Erfassung von Betriebsparameterdaten eines Motorsystems mit Elektromotor, vorzugsweise für einen Ventilator,
wobei während eines Betriebs des Motorsystems Zustände von Betriebsparametern erfasst werden,
wobei die Betriebsparameter einen Basisparameter und zumindest einen Zusatzparameter umfassen,
wobei, basierend auf einer Zustandserfassung des Basisparameters, Zustandsänderungsereignisse des Basisparameters ermittelt werden,
wobei bei einer Detektion eines Zustandsänderungsereignisses des Basisparameters ein Zustand des Zusatzparameters erfasst wird, wobei der erfasste Zustand des Zusatzparameters mit dem detektierten Zustandsänderungsereignis verknüpft gespeichert wird, wobei das detektierte Zustandsänderungsereignis und der erfasste Zustand des Zusatzparameters und ggf. der erfasste Zustand des weiteren Zusatzparameters bzw. die erfassten Zustände der weiteren Zusatzparameter als Zustandskombination gespeichert werden,
das Verfahren ist **gekennzeichnet dadurch dass**
Zustandskombinationen, die infolge von detektierten Zustandsänderungsereignissen erzeugt werden, mittels einer, vorzugsweise geschachtelten, Matrix mit Matrixelementen gespeichert werden, wobei die Zustandskombination in der Matrix so abgelegt werden, dass eine Verteilung der detektierten Zustandsänderungsereignisse des Basisparameters erhältlich ist, und wobei die Zustandskombinationen in der Matrix so abgelegt werden, dass über Indizes der Matrix, vorzugsweise Spaltenindizes und Zeilenindizes der Matrix, Startzustände und Zielzustände der Zustandsänderungsereignisse abgebildet werden, und wobei in den Matrixelementen der Matrix Informationen hinsichtlich der Anzahl der Zustandsereignisse hinterlegt werden.

2. Verfahren nach Anspruch 1, **dadurch gekennzeichnet, dass** bei der Zustandserfassung eines Betriebsparameters eine Klassierung zugrunde gelegt wird, wobei ein erfasster Zustand des Betriebsparameters einer Klasse der Klassierung zugeordnet wird.

3. Verfahren nach Anspruch 1 oder 2, **dadurch gekennzeichnet, dass** bei der Detektion des Zustandsänderungsereignisses des Basisparameters ein Zustand eines oder mehrerer weiterer Zusatzparameter erfasst wird, wobei der erfasste Zustand des weiteren Zusatzparameters bzw. die erfassten Zustände der weiteren Zusatzparameter mit dem detektierten Zustandsänderungsereignis verknüpft gespeichert wird bzw. werden.

4. Verfahren nach einem der Ansprüche 1 bis 3, **dadurch gekennzeichnet, dass** die Speicherung der Zustandskombination in Abhängigkeit von der Veränderung des Basisparameters erfolgt.

5. Verfahren nacheinem der Ansprüche 1 bis 4, **dadurch gekennzeichnet, dass** das detektierte Zustandsänderungsereignis durch die Zustandskombination derart gespeichert wird, dass Startzustand und Zielzustand der Zustandsänderung des detektierten Zustandsänderungsereignisses des Basisparameters in der Zustandskombination hinterlegt sind.

6. Verfahren nach einem der Ansprüche 1 bis 5, **dadurch gekennzeichnet, dass** in den Matrixelementen der Matrix Informationen über erfasste Zustände von Zusatzparametern hinterlegt werden.

7. Verfahren nach einem der Ansprüche 1 bis 6, **dadurch gekennzeichnet, dass** der mittels der Zustandserfassung des Basisparameters ermittelte Zustand des Basisparameters in vorgebbaren Auswertungsintervallen einer Auswertung unterzogen wird, um ein Zustandsänderungsereignis des Basisparameters zu detektieren,
wobei die Auswertung derart implementiert sein kann, dass bei Überschreiten einer vorgebbaren Änderungsschwelle ein Zustandsänderungsereignis des Basisparameters festgestellt wird.

8. Verfahren nach einem der Ansprüche 1 bis 7, **dadurch gekennzeichnet, dass** die Betriebsparameter einen Drehzahlparameter, Temperaturparameter, Stromparameter und/oder Spannungsparameter etc. umfassen.

9. Verfahren nach einem der Ansprüche 1 bis 8, **dadurch gekennzeichnet, dass** als Basisparameter ein Drehzahlparameter verwendet wird, und/oder dass als Basisparameter ein Spannungsparameter verwendet wird.

10. Motorsystem zur Erfassung von Betriebsparameterdaten, und zur Durchführung eines Verfahrens nach einem der Ansprüche 1 bis 9, das Motorsystem umfassend:
einen Elektromotor mit einem Stator und einem relativ zu dem Stator drehbaren Rotor, und
eine Steuereinrichtung mit einem Prozessor und einem Speicher, wobei die Steuereinrichtung derart konfiguriert ist, dass während eines Betriebs des Motorsystems Zustände von Betriebsparametern erfasst werden, wobei die Betriebsparameter einen Basisparameter und zumindest einen Zusatzparameter umfassen,
wobei die Steuereinrichtung weiterhin derart konfiguriert ist, dass, basierend auf einer Zustandserfassung des Basisparameters, Zustandsänderungsereignisse des Basisparameters ermittelt werden,
dass bei einer Detektion eines Zustandsänderungsereignisses des Basisparameters ein Zustand des Zusatzparameters erfasst wird, und
dass in dem Speicher der erfasste Zustand des Zusatzparameters mit dem detektierten Zustandsänderungsereignis verknüpft gespeichert wird

11. Ventilator mit einem Motorsystem nach Anspruch 10, zur Durchführung eines Verfahrens nach einem der Ansprüche 1 bis 9.

## Claims

1. Method for detecting operating parameter data of a motor system having an electric motor, preferably for a fan, wherein during operation of the motor system states of operating parameters are detected,
wherein the operating parameters include a basic parameter and at least one additional parameter,
wherein, based on a state detection of the basic parameter, state change events of the basic parameter are established,
wherein, when a state change event of the basic parameter is detected, a state of the additional parameters is detected,
wherein the detected state of the additional parameter is stored in a state linked with the detected state change event,
wherein the detected state change event and the detected state of the state parameter and where applicable the detected state of the additional state parameter or the detected states of the additional parameters are stored as a state combination,
the method is **characterised in that**
state combinations which are produced as a result of detected state change events are stored by means of a preferably nested matrix with matrix elements, wherein the state combinations are stored in the matrix in such a manner that a distribution of the detected state change events of the basic parameter can be obtained, and wherein the state combinations are stored in the matrix in such a manner that via indexes of the matrix, preferably column indexes and row indexes of the matrix, starting states and target states of the state change events are depicted, and wherein in the matrix elements of the matrix information items relating to the number of the state events are stored.

2. Method according to claim 1, **characterised in that**, during the state detection of an operating parameter, a classification is taken as a basis, wherein a detected state of the operating parameter is associated with a class of the classification.

3. Method according to claim 1 or 2, **characterised in that**, during the detection of the state change event of the basic parameter, a state of one or more other additional parameters is detected, wherein the detected state of the additional state parameter or the detected states of the other additional parameters is/are stored in a state linked with the detected state change event.

4. Method according to any one of claims 1 to 3, **characterised in that** the storage of the state combination is carried out in accordance with the change of the basic parameter.

5. Method according to any one of claims 1 to 4, **characterised in that** the detected state change event is stored by the state combination in such a manner that the starting state and target state of the state change of the detected state change event of the basic parameter are stored in the state combination.

6. Method according to any one of claims 1 to 5, **characterised in that** information items relating to detected states of additional parameters are stored in the matrix elements of the matrix.

7. Method according to any one of claims 1 to 6, **characterised in that** the state of the basic parameter established by means of the state detection of the basic parameter is subjected to an evaluation at predeterminable evaluation intervals in order to detect a state change event of the basic parameter, wherein the evaluation can be implemented in such a manner that, when a predeterminable change threshold is exceeded, a state change event of the basic parameter is determined.

8. Method according to any one of claims 1 to 7, **characterised in that** the operating parameters comprise a speed parameter, temperature parameter, current parameter and/or voltage parameter, etcetera.

9. Method according to any one of claims 1 to 8, **characterised in that** a speed parameter is used as a basic parameter and/or **in that** a voltage parameter is used as a basic parameter.

10. Motor system for detecting operating parameter data and carrying out a method according to any one of claims 1 to 9, the motor system comprising:
an electric motor having a stator and a rotor which can be rotated relative to the stator, and
a control device having a processor and a memory, wherein the control device is configured in such a manner that during operation of the motor system states of operating parameters are detected, wherein the operating parameters comprise a basic parameter and at least one additional parameter,
wherein the control device is further configured in such a manner that, based on a state detection of the basic parameter, state change events of the basic parameter are established,
in that, when a state change event of the basic parameter is detected, a state of the additional parameter is detected, and
in that the detected state of the additional parameter is stored in the memory in a state linked with the detected state change event.

11. Fan having a motor system according to claim 10 for carrying out a method according to any one of claims 1 to 9.

## Revendications

1. Procédé de mesure de données de paramètres de fonctionnement d'un système de moteur avec un moteur électrique, de préférence pour un ventilateur,
dans lequel, pendant un fonctionnement du système de moteur, des états des paramètres de fonctionnement sont mesurés,
dans lequel les paramètres de fonctionnement comprennent un paramètre de base et au moins un paramètre d'état,
dans lequel, sur la base d'une mesure d'état du paramètre de base, des événements de changements d'états du paramètre de base sont déterminés,
dans lequel, lors d'une détection d'un événement de changement d'état du paramètre de base, un état du paramètre additionnel est mesuré, dans lequel l'état mesuré du paramètre additionnel est enregistré de manière liée avec l'événement de changement d'état détecté, dans lequel l'événement de changement d'état et l'état mesure du paramètre additionnel et, le cas échéant l'état mesuré de l'autre paramètre additionnel ou les états mesurés des autres paramètres additionnels sont enregistrés en tant que combinaison d'états,
le procédé est **caractérisé en ce que**
des combinaisons d'états, qui sont générés à la suite d'événements de changement d'état détectés, sont enregistrées au moyen d'une matrice, de préférence imbriquée, avec des éléments de matrice, dans lequel la combinaison d'états est enregistrée dans la matrice de sorte qu'une répartition des événements de changements d'états détectés du paramètre de base est disponible et dans lequel les combinaisons d'états sont enregistrés dans la matrice de sorte que, par l'intermédiaire d'index de la matrice, de préférence des index de colonnes des index cibles de la matrice, des états initiaux et des états cibles des événements de changement d'état sont représentés et dans lequel, dans les éléments de matrice de la matrice, sont enregistrées des informations concernant le nombre d'événements d'états.

2. Procédé selon la revendication 1, **caractérisé en ce que**, lors de la mesure d'état d'un paramètre de fonctionnement, une classification est effectuée, dans lequel un état mesuré du paramètre de fonctionnement correspond à une classe de la classification.

3. Procédé selon la revendication 1 ou 2, **caractérisé en ce que**, lors de la détection de l'événement de changement d'état du paramètre de base, un état d'un ou plusieurs autres paramètres additionnels est mesuré, dans lequel l'état mesuré de l'autre paramètre additionnel ou les états mesurés des autres paramètres additionnels sont enregistrés de manière liée avec l'événement de changement d'état détecté.

4. Procédé selon l'une des revendications 1 à 3, **caractérisé en ce que** l'enregistrement de la combinaison d'états a lieu en fonction du changement du paramètre de base.

5. Procédé selon l'une des revendications 1 à 4, **caractérisé en ce que** l'événement de changement d'état détecté est enregistré grâce à la combinaison d'états de sorte que l'état initial et l'état cible du changement d'état de l'événement de changement d'état détecté du paramètre de base sont enregistrés dans la combinaison d'états.

6. Procédé selon l'une des revendications 1 à 5, **caractérisé en ce que**, dans les éléments de matrice de la matrice, sont enregistrées des informations concernant les états mesurés de paramètres additionnels.

7. Procédé selon l'une des revendications 1 à 6, **caractérisé en ce que** l'état déterminé au moyen de la mesure d'état du paramètre de base est soumis, à des intervalles d'analyse prédéterminés, à une analyse afin de détecter un événement de changement d'état du paramètre de base,
dans lequel l'analyse peut être implémentée de sorte que, lors d'un dépassement d'un seuil de changement prédéterminé, un événement de changement d'état du paramètre de base est constaté.

8. Procédé selon l'une des revendications 1 à 7, **caractérisé en ce que** les paramètres de fonctionnement comprennent un paramètre de vitesse de rotation, un paramètre de température, un paramètre de courant et/ou un paramètre de tension, etc.

9. Procédé selon l'une des revendications 1 à 8, **caractérisé en ce que**, en tant que paramètre de base, un paramètre de vitesse de rotation est utilisé et/ou en tant que paramètre de base un paramètre de tension est utilisé.

10. Système de moteur pour la mesure de données de paramètres de fonctionnement et pour l'exécution d'un procédé selon l'une des revendications 1 à 9, le système de moteur comprenant :
un moteur électrique avec un stator et un rotor rotatif par rapport au stator et
un dispositif de commande avec un processeur et une mémoire, dans lequel le dispositif de commande est conçu de sorte que, pendant un fonctionnement du système de moteur, des états de paramètres de fonctionnement sont mesurés, dans lequel les paramètres de fonctionnement comprennent un paramètre de base et au moins un paramètre additionnel,
dans lequel le dispositif de commande est en outre conçu de sorte que, sur la base d'une mesure d'état du paramètre de base, des événements de changements d'état du paramètre de base sont déterminés,
lors d'une détection d'un événement de changement d'état du paramètre de base, un état du paramètre additionnel est mesuré et
l'état mesuré du paramètre additionnel est enregistré dans la mémoire de manière liée avec l'événement de changement d'état détecté.

11. Ventilateur avec un système de moteur selon la revendication 10, pour l'exécution d'un procédé selon l'une des revendications 1 à 9.
